# FASCICULE DE BREVET EUROPEEN

(11) **EP 1 819 861 B1**
(45) Date de publication et mention de la délivrance du brevet: **27.11.2013**
(21) Numéro de dépôt: 05824386.6
(22) Date de dépôt: 07.12.2005
(51) Int. Cl.: D01D 5/18, D04H 1/655, D04H 1/732, D04H 1/736, C03B 37/04, D04H 1/72

(54) **DISPOSITIF DE FORMATION DE FEUTRES DE FIBRES**
VORRICHTUNG ZUR HERSTELLUNG VON FASERFILZEN
DEVICE FOR FORMING FIBER FELTS

(30) Priorité: 09.12.2004 FR 0452908
(43) Date de publication de la demande: 22.08.2007
(73) Titulaire: SAINT-GOBAIN ISOVER, 92400 Courbevoie (FR)
(72) Inventeur: DECROCQ, François, F-84100 Orange (FR); BOULANOV, Oleg, F-60180 Nogent sur Oise (FR); POUROUCHOTTAMANE, Manivannane, F-77500 Chelles (FR); LACAUTE, Daniel, F-60560 Orry La Ville (FR)
(74) Mandataire: Aupetit, Muriel J. C.
(86) Numéro de dépôt international: PCT/FR2005/051056
(87) Numéro de publication internationale: WO 2006/061545

(56) Documents cités:
- US-A- 4 300 931
- US-A- 4 544 393

## Description

L'invention est relative à la formation de feutres de fibres tels que ceux destinés à l'isolation thermique et acoustique, et concerne plus particulièrement un dispositif d'amélioration de la distribution des fibres qui sont collectées sur un organe de réception.

La formation de fibres, notamment de fibres minérales telles que des fibres de verre, résulte d'un procédé de fibrage consistant en l'étirage de la matière, telle que du verre, par centrifugation et par l'action de courants gazeux à haute température.

Le procédé de fibrage couramment utilisé aujourd'hui est le procédé dit par centrifugation interne. Il consiste à introduire un filet de la matière étirable à l'état fondu dans un centrifugeur, encore appelé assiette de fibrage, tournant à grande vitesse et percé à sa périphérie par un très grand nombre d'orifices par lesquels la matière est projetée sous forme de filaments sous l'effet de la force centrifuge. Au moyen d'un brûleur annulaire, ces filaments sont alors soumis à l'action d'un courant annulaire gazeux d'étirage à température et vitesse élevées longeant la paroi du centrifugeur qui réduit leur diamètre et les transforme en fibres.

Par ailleurs, le courant gazeux d'étirage est généralement confiné, au moyen d'une nappe gazeuse froide enveloppante le canalisant de manière adéquate sous forme d'un flux tubulaire. Cette nappe gazeuse est produite par une couronne de soufflage entourant le brûleur annulaire. Froide, elle permet de plus d'aider au refroidissement des fibres dont la résistance mécanique est ainsi améliorée vraisemblablement par un effet de trempe thermique.

Il est aussi courant d'ajouter un inducteur annulaire en dessous du dispositif de centrifugation pour aider au maintien de l'équilibre thermique de l'assiette. Cet inducteur permet de chauffer le bas de la bande périphérique de l'assiette qui est moins chauffé par les gaz d'étirage car plus éloigné du brûleur annulaire, et qui est soumis à un refroidissement par l'air ambiant.

Les fibres formées sont entraînées par le courant gazeux d'étirage vers un tapis de réception généralement constitué par une bande perméable aux gaz sur lequel les fibres s'enchevêtrent sous la forme d'un matelas.

Pour fixer les fibres entre elles, un liant est généralement pulvérisé sur les fibres au cours de leur trajectoire vers le tapis de réception. La projection du liant est par exemple réalisée à l'aide d'une couronne qui entoure le courant gazeux et qui comporte une pluralité d'orifices de pulvérisation.

Le liant est ensuite durci par exemple par un traitement thermique au-delà du tapis de réception.

Une des difficultés rencontrées dans la préparation de ces feutres est liée à la distribution des fibres dans l'ensemble du feutre que l'on désire la plus uniforme. Une irrégularité de la distribution peut se traduire par une densité locale inférieure à la densité souhaitée, ce que l'on corrige généralement à la fabrication en augmentant la densité moyenne du feutre. Or, il est toujours souhaitable de réduire la densité d'un produit pour le rendre moins lourd et obtenir des performances d'isolation, en particulier thermique, tout aussi bonnes. On cherche donc continuellement sur une ligne de production à homogénéiser au mieux la répartition des fibres dans le feutre.

Un moyen connu pour améliorer la distribution des fibres est l'utilisation d'un dispositif dit à balancelle (« bucket »), tel que celui décrit dans la demande de brevet FR 2 544 754, qui est constitué par un conduit de guidage disposé sur le trajet du courant gazeux en dessous du centrifugeur et au dessus du dispositif de projection de liant. Ce conduit permet de canaliser les fibres ; il est animé d'un mouvement d'oscillation pour diriger alternativement le flux de fibres d'un bord à l'autre du tapis de réception des fibres.

Cependant, cette solution a tendance à dégrader les propriétés des fibres par effet de frottement lors de leur impact sur les parois du dispositif à balancelle.

Un autre moyen connu consiste à souffler de l'air en direction du flux gazeux tubulaire, de manière sensiblement perpendiculaire pour le traverser.

Le brevet FR 1 244 530 décrit ainsi deux buses qui sont agencées au-delà du dispositif de projection de liant et diamétralement opposées au flux gazeux, et dont les jets d'air sont actionnés à tour de rôle pour imprimer au voile de fibres un mouvement de va-et-vient lorsqu'il se dépose sur le tapis de réception.

Le brevet US 4 266 960 montre deux dispositifs qui fournissent chacun un jet d'air plat arrivant à grande vitesse perpendiculairement et dans le flux gazeux tubulaire, les deux dispositifs étant disposés de part et d'autre du flux gazeux de façon que l'orientation des jets d'air assurent une séparation du flux tubulaire en plusieurs flux divergents.

Ces différents moyens de soufflage contraignent donc l'air à être dirigé de manière sensiblement perpendiculaire au voile tubulaire de fibres pour diviser le flux tubulaire et/ou modifier son orientation. Ces moyens risquent toutefois de créer des trous dans le voile au moment de l'impact du jet d'air, n'optimisant pas au final une répartition homogène des fibres sur le tapis de réception.

En outre, un des risques liés à l'utilisation de ces moyens est qu'ils sont très difficiles à réguler par un opérateur.

Enfin, du document FR 2 510 909, on connaît un procédé pour l'amélioration de la distribution des fibres qui consiste à créer une nappe gazeuse dirigée de façon à longer le voile tubulaire portant les fibres sur sa périphérie en l'enveloppant, la direction d'écoulement de cette nappe gazeuse dans le plan tangent au voile tubulaire faisant un angle avec la direction d'écoulement du voile qui est compris entre 10 et 60°.

Le dispositif de mise en oeuvre dans ce procédé consiste en une couronne de soufflage comprenant une chambre annulaire dont la base conduit un gaz sous pression de façon à engendrer une nappe gazeuse. Selon une disposition, la base de la chambre présente dans une première variante des trous inclinés, ou bien dans une autre variante, une fente continue, la direction d'écoulement étant assurée par des ailettes inclinées disposées à intervalles réguliers dans cette fente sur le trajet de la nappe gazeuse.

Cependant, ce type de dispositif souffle de l'air tangentiellement aux fibres depuis la base de la chambre, selon un angle compris entre 10 et 60° par rapport au flux du voile tubulaire, et dans la zone ou en fin de zone d'étirage des fibres, ce qui ne permet pas un réglage de la répartition qui soit indépendant de la qualité de fibre obtenue.

Le document US 4 544 39 A décrit un appareil pour la production de fibres par centrifugation. Cet appareil comprend une assiette de centrifugation montée de façon rotative pour centrifuger des flux de matière fondue, un souffleur annulaire entourant l'assiette pour diriger la matière fondue en tant que fibres parallèlement à l'axe de rotation de l'assiette, et un ou plusieurs organes générant de la turbulence, ces organes étant positionnés sous l'assiette et montés dessus en rotation pour augmenter les turbulences dans un endroit radialement à l'extérieur de et sous l'assiette.

Le document US 4 478 624 A décrit un appareil pour produire des mats en fibres minérales sur une surface perforée de récupération de fibres. L'appareil comprend des moyens d'étirage de matière fondue dans une zone d'étirement dans un courant de gaz. L'appareil comprend également des moyens pour orienter ledit courant avec les fibres étirées vers la surface de récupération des fibres. L'appareil comprend également des moyens de soufflage pour développer une couche de gaz entourant et avoisinant la périphérie du courant portant les fibres. L'appareil comprend également des moyens pour orienter ladite couche en contact avec le courant de gaz en aval de ladite zone d'étirement. La direction générale du flux de gaz de ladite couche est vers la surface de récupération et les moyens de soufflage comportent des moyens positionnés périphériquement autour du courant et adaptés à délivrer du gaz à un angle oblique par rapport à la partie avoisinante du courant de gaz portant les fibres.

L'invention a donc pour but de fournir un dispositif pour la fabrication de feutres de fibres en vue d'améliorer la répartition des fibres dans un feutre, notamment en conservant la qualité requise des fibres en sortie d'étirage, ce dispositif ne présentant pas les inconvénients de l'art antérieur et permettant d'obtenir des feutres homogènes, de la densité souhaitée en vue d'une performance thermique ou isolante donnée.

Selon l'invention, le dispositif destiné à une installation de formation de feutres de fibres qui sont formées à partir d'une matière étirable par centrifugation interne et par étirage au moyen d'un courant gazeux, le flux de fibres se présentant sous forme d'un voile sensiblement tubulaire, ce dispositif comprenant des moyens de soufflage d'air projetant de l'air tangentiellement au voile de manière à lui imprimer un mouvement de rotation, est caractérisé en ce que les moyens de soufflage amènent de l'air selon une direction perpendiculaire à la direction principale du flux du voile.

On entend par, selon une direction perpendiculaire à la direction principale du flux, que la vitesse des gaz a une seule composante dont la direction est perpendiculaire à la direction principale du flux du voile.

Ainsi, l'air soufflé tangentiellement au voile crée de manière très efficace un mouvement de rotation qui permet par l'énergie centrifuge engendrée de créer un vortex assurant alors l'expansion du voile; le diamètre du voile grossit et lorsque le voile tombe sur le tapis, il s'étale de manière homogène.

Ce dispositif soufflant de l'air de manière homogène sur la circonférence du voile de fibres n'engendre pas de perturbations locales au sein du voile contrairement à des dispositifs de l'art antérieur. A l'expérience, on constate que ce dispositif permet un contrôle plus fiable alors que les dispositifs de soufflage de l'art antérieur peuvent provoquer des conditions plus instables, difficiles à maîtriser.

La répartition plus uniforme permet une diminution de la densité du feutre, le produit est donc moins lourd et moins cher à produire tout en conservant les mêmes propriétés d'isolation. La réduction de la densité permet également pour un même débit de la matière fondue étirable d'augmenter la quantité produite de feutres.

Selon une caractéristique, les moyens de soufflage délivrent de l'air sous une vitesse de 5 à 40 m/s, qui peut néanmoins varier de 1 à 45 m/s, et peut être avantageusement de l'ordre de 10 à 30 m/s. La pression fournie pour souffler l'air est d'au plus 60 mmCE, et peut toutefois aller jusqu'à 350 mmCE. Rappelons que 1mmCE correspond à 9, 81 Pa.

Ce système est ainsi faible consommateur d'énergie du fait qu'il utilise de l'air à faible pression (inférieur à 60 mmCE). Aussi, ce soufflage d'air tangentiel à basse vitesse et à faible pression, permet d'expanser le jet de fibres de l'intérieur vers l'extérieur sans faire de trous dans la structure du voile de fibres, tout en minimisant la formation de mèches défavorables à la structure du produit.

Selon une autre caractéristique, les moyens de soufflage consistent en une chambre annulaire qui comporte une paroi externe pleine et une paroi interne partiellement ouverte et destinée à entourer le voile tubulaire, la paroi externe présentant au moins une arrivée d'air et la paroi interne comprenant des ailettes d'obturation partielle.

De préférence, la chambre annulaire est alimentée par une pluralité d'arrivées d'air, par exemple trois ou quatre, la pression de l'air sortant de chaque arrivée pouvant être réglable pour introduire, soit un soufflage homogène sur l'ensemble de la périphérie, soit si besoin des écarts de pression sur la périphérie de la chambre pour corriger des dissymétries du flux du voile de fibres en compensant par des vitesses d'air différentes par secteur.

Selon une autre caractéristique, les ailettes, notamment pivotables, sont orientées selon un angle d'ouverture, de préférence compris entre 15 et 25°, qui peut cependant atteindre 40°, et qui est de préférence compris entre 20 et 30°.

De préférence, la paroi interne est doublée d'un bandeau annulaire en regard du voile et s'étendant sur au moins une partie de la hauteur des ailettes. Ce bandeau constitue un moyen supplémentaire pour régler la section d'ouverture d'amenée d'air tangentiellement au voile.

De manière optionnelle, la chambre annulaire comporte une grille annulaire de répartition de l'air au travers de la paroi interne et en regard des ailettes.

Avantageusement, le dispositif comporte au moins une paroi tubulaire et évasée de prolongement qui s'étend d'un côté de la chambre annulaire (du côté aval en position montée du dispositif), la paroi étant destinée à diffuser le voile tubulaire en sortie des moyens de soufflage.

Une autre paroi tubulaire et évasée de prolongement peut être prévue ; elle s'étend à l'opposé de la première paroi de prolongement, de l'autre côté de la chambre annulaire (du côté amont en position montée du dispositif), et est destinée à guider le voile tubulaire à l'entrée des moyens de soufflage.

L'invention concerne également une installation de formation de feutres de fibres comportant un dispositif de centrifugation d'une matière étirable qui est pourvu d'une assiette de fibrage délivrant des filaments de ladite matière, un inducteur qui est agencé sous le dispositif de centrifugation, et un dispositif d'étirage gazeux qui fournit un courant gazeux à haute température et qui assure la transformation des filaments en fibres sous la forme d'un voile sensiblement tubulaire, l'installation étant caractérisée en ce qu'elle comporte un dispositif d'amélioration de la répartition des fibres selon l'invention qui est placé immédiatement sous l'inducteur ou bien à distance de l'inducteur.

De préférence, en particulier lorsque le dispositif est disposé sous l'inducteur, il est constitué d'un matériau résistant à la chaleur et ne captant pas le champ magnétique généré par l'inducteur.

Selon une caractéristique, la distance de séparation du dispositif à l'inducteur est de l'ordre de 0,5 à 1,5 fois le diamètre de l'assiette de fibrage. Le dispositif peut cependant être immédiatement sous l'inducteur et même y être accolé.

L'installation peut comporter un dispositif d'amenée de liant qui est disposé en aval du dispositif d'amélioration de la répartition des fibres.

Les termes amont et aval dans la suite de la description doivent être compris comme les parties plus basse et respectivement plus haute d'un élément en regard d'une partie de l'installation qui, mis en place pour son fonctionnement reçoit l'écoulement de la matière à fibrer du haut vers le bas.

Enfin, l'invention se rapporte à un procédé de fabrication d'un feutre de fibres utilisant le dispositif de l'invention pour améliorer la répartition des fibres dans le feutre.

D'autres avantages et caractéristiques de l'invention vont à présent être décrits plus en détail en regard des dessins annexés sur lesquels :
- les figures 1 et 2 représentent des vues partielles schématiques en coupe de deux variantes respectives d'installations de formation de feutres de fibres comportant un dispositif d'amélioration de répartition des fibres selon l'invention;
- la figure 3 illustre une vue détaillée en coupe et de dessus du dispositif d'amélioration de l'invention;
- la figure 4 représente une vue en coupe verticale d'une variante de réalisation du dispositif d'amélioration;
- la figure 5 illustre une courbe sur le coefficient de variation de la masse surfacique d'un feutre en fonction de la vitesse de l'air projeté par le dispositif de l'invention.

Les représentations illustrées sur les figures sont schématiques sans être strictement à l'échelle pour en faciliter la lecture.

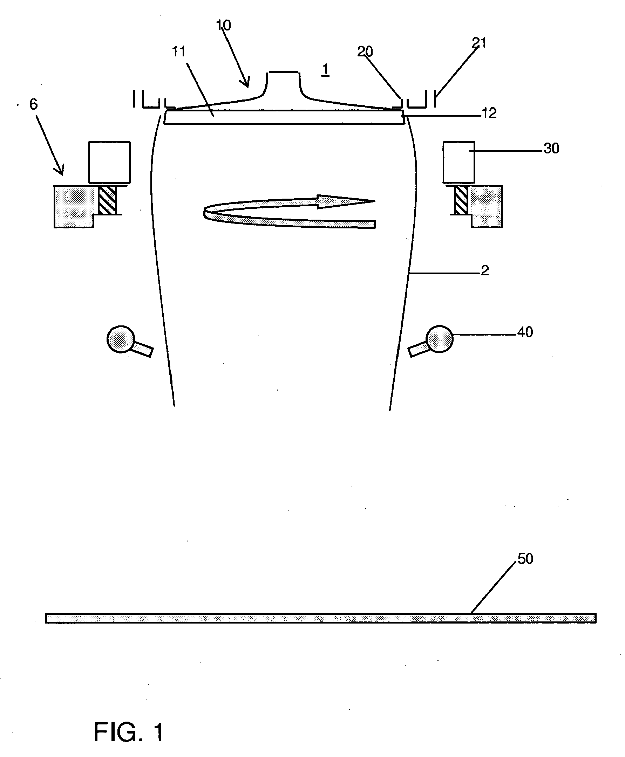

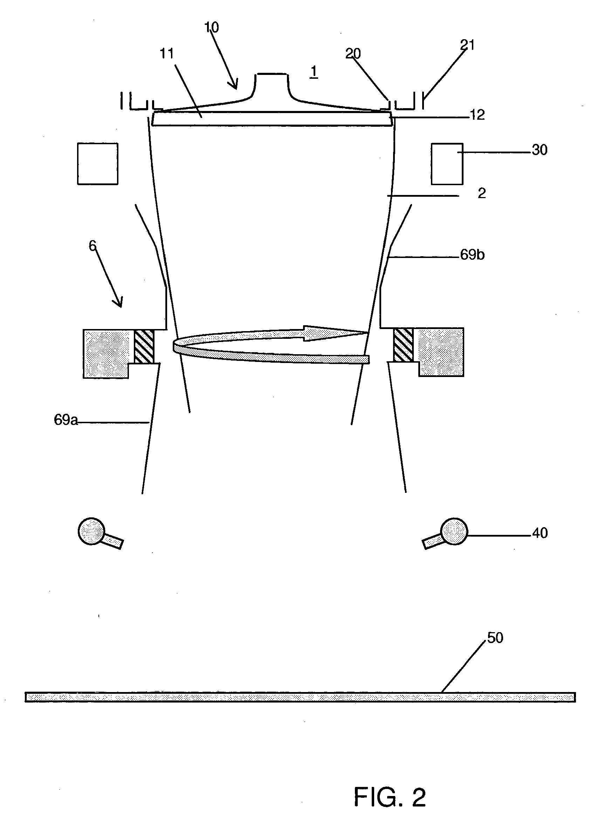

Les figures 1 et 2 représentent des vues partielles, en coupe transversale et selon un plan vertical, de deux variantes respectives de réalisation d'une installation de formation de feutres de fibres comprenant le dispositif 6 de l'invention dont notamment la disposition diffère d'une variante à l'autre.

Une installation 1 comporte de manière commune aux deux figures, et de manière connue d'amont en aval, ou de haut en bas selon le sens d'écoulement de la matière étirable à l'état fondu, un dispositif de centrifugation interne 10 qui délivre des filaments d'une matière étirable, un dispositif d'étirage 20 délivrant un courant gazeux qui transforme les filaments en fibres, un inducteur 30 annulaire situé sous le dispositif de centrifugation 10, un dispositif d'amenée de liant 40, un tapis de réception 50 des fibres sur lequel s'accumulent les fibres pour constituer le feutre.

Le dispositif de centrifugation 10 comporte un centrifugeur 11, encore appelé assiette de fibrage, tournant à grande vitesse et percé au niveau de sa paroi périphérique par un très grand nombre d'orifices par lesquels la matière fondue est projetée sous forme de filaments sous l'effet de la force centrifuge.

Le dispositif d'étirage 20 comporte un brûleur annulaire qui délivre un courant gazeux à température et vitesse élevées en longeant la paroi 12 du centrifugeur. Ce brûleur sert à maintenir la température élevée de la paroi du centrifugeur et contribue à l'amincissement des filaments pour les transformer en fibres qui tombent sous la forme d'un voile sensiblement tubulaire 2.

Le courant gazeux d'étirage est généralement canalisé au moyen d'une nappe gazeuse froide enveloppante. Cette nappe gazeuse est produite par une couronne de soufflage 21 entourant le brûleur annulaire. Froide, elle permet de plus d'aider au refroidissement des fibres dont la résistance mécanique est ainsi améliorée par un effet de trempe thermique.

L'inducteur annulaire 30 chauffe le dessous du dispositif de centrifugation pour aider au maintien de l'équilibre thermique de l'assiette.

Le dispositif d'amenée de liant 40 est constitué d'une couronne au travers de laquelle s'écoule le voile tubulaire de fibres. La couronne comporte une multiplicité de buses arrosant de liant le voile de fibres.

Le voile de fibres est alors déposé sur le tapis de réception 50.

Pour améliorer la distribution des fibres sur le tapis, l'installation comporte le dispositif 6 de l'invention situé en dessous du dispositif d'étirage et de l'inducteur. Ce dispositif consiste en des moyens de soufflage ou de projection d'air à faible pression dans une direction tangentielle et perpendiculaire au flux du voile de fibres tubulaire de façon à lui imprimer un mouvement énergique de rotation de sorte qu'un vortex se développe autour de l'axe du voile, le voile n'étant alors plus tubulaire mais s'évase progressivement. Ce vortex engendre ainsi une expansion homogène du jet de fibres, ce qui permet un étalement de manière uniforme des fibres sur la largeur du tapis de réception 50.

Les moyens de projection d'air délivrent de l'air à une vitesse qui peut varier de 1 à 45 m/s. Cette vitesse est notamment obtenue à partir d'air soufflé sous faible pression, c'est-à-dire sous une pression d'au plus 350 mm CE.

Dans une première variante de réalisation illustrée dans l'installation de la figure 1, les moyens 6 de projection d'air sont agencés juste dessous l'inducteur 30. Les moyens 6 sont dans cette variante de réalisation faits en un matériau résistant à la chaleur et ne captant pas le champ magnétique générés par l'inducteur.

Les moyens 6 consistent en une chambre annulaire qui entoure le voile de fibres 2.

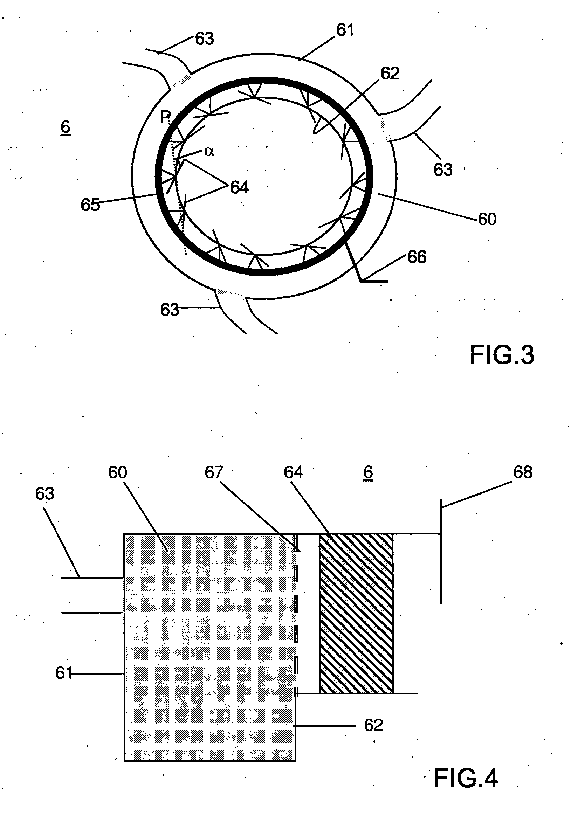

Cette chambre annulaire visible en vue de dessus sur la figure 3, comporte une paroi externe 61 et une paroi interne 62 qui délimitent une cavité annulaire 60 dans laquelle arrivent de l'air via la paroi externe et par laquelle, via la paroi interne, l'air est amené tangentiellement et perpendiculairement au voile tubulaire 2.

La paroi externe 61 comprend au moins un orifice d'alimentation en air 63, par exemple au nombre de trois ou quatre qui sont avantageusement placés à équidistance sur la périphérie de la chambre de manière à homogénéiser le volume d'air débouchant dans la cavité 60.

Il sera avantageusement prévu en amont de chacun des orifices d'alimentation des moyens individuels de réglage de la pression, ici non illustrés, afin d'ajuster la vitesse de sortie de l'air de chacun des orifices, de sorte que des écarts de pression peuvent être générés sur la périphérie de la chambre pour corriger si besoin des défauts d'équilibrage sur la périphérie qui peuvent se traduire par des défauts de répartition dans le voile de fibres.

La paroi interne 62 est partiellement ouverte, elle est obturée au moyen d'ailettes 64 qui sont orientées de manière adéquate pour contrôler la vitesse et la direction de l'air sortant.

Les ailettes 64 sont fixées à la paroi au moins en deux points alignés selon un axe parallèle aux parois 61 et 62. Elles sont maintenues en position fixe selon un angle choisi d'inclinaison ou d'ouverture α par rapport au plan P tangentiel aux points de fixation d'une ailette, angle compris entre 15 et 40°, et de préférence entre 20 et 30°.

Les ailettes sont soit rendues solidaires de la cavité 60 dans une position déterminée, soit en variante, elles sont aptes à pivoter autour de l'axe qui passe par leurs points de fixation à la paroi afin de gérer l'angle d'inclinaison α voulu.

Le pivotement des ailettes 64 est réalisé par leur solidarisation à un élément annulaire 65, tel qu'un disque, qui est disposé dans la cavité 60 et est adapté à tourner. Ce disque est relié à un organe de préhension 66 qui est extérieur à la paroi externe 62 et dont l'actionnement permet la rotation du disque. L'organe de préhension est associé à des moyens de verrouillage en rotation du disque (non illustrés).

Les ailettes permettent de gérer la variation de surface d'obturation de la paroi interne 62, avec pour conséquence de faire varier la vitesse et la direction d'arrivée de l'air autour du voile de fibres. Plus l'angle d'inclinaison α est grand, c'est-à-dire moins est fermée la paroi interne, moins l'air est accéléré lorsqu'il débouche sur le voile de verre. Tandis que plus l'angle d'inclinaison α est faible, les ailettes étant donc orientées le plus tangentiellement possible à la paroi interne 62, plus l'air est accéléré en arrivant sur le voile de verre.

En outre, la vitesse de l'air est également contrôlée par la pression d'alimentation en air.

L'air délivré en sortie des ailettes est de l'ordre de 1 à 45 m/s.

De manière optionnelle, une grille annulaire de répartition de l'air 67 (figure 4), par exemple en tôle perforée, peut être envisagée dans la cavité 60 en regard des ailettes 64 en fonction du nombre d'orifices d'alimentation 63 prévu, de manière à optimiser l'homogénéisation du soufflage de l'air au niveau des ailettes.

En outre, il peut être préféré d'ajouter en regard et en sortie des ailettes en direction du voile, un bandeau annulaire 68 réglable en hauteur qui permet d'obturer partiellement la partie supérieure des ailettes. Ce bandeau constitue un autre moyen de régler l'ouverture de la paroi pour régler la vitesse de délivrance de l'air.

Dans le mode de réalisation de la figure 2, le dispositif d'amélioration 6 est similaire à celui de la figure 1, en étant toutefois disposé à distance de l'inducteur 30 mais en restant en amont du dispositif de projection de liant 40. La distance séparant le dispositif 6 de l'inducteur est de l'ordre de 0,5 à 1,5 fois le diamètre de l'assiette de fibrage.

Le dispositif 6 comporte les mêmes éléments du dispositif décrit en regard des figures 1, 3 et 4.

Néanmoins, du fait de son éloignement de l'inducteur 30, il n'a pas nécessairement besoin d'être constitué du même matériau résistant à une forte chaleur et ne captant pas le champ magnétique ; il est par exemple en inox.

En outre, il comporte de préférence des parois tubulaires et évasées de prolongement 69a et 69b qui s'étendent de part et d'autre de la chambre annulaire sensiblement dans la direction du voile tubulaire de fibres, respectivement en amont pour canaliser le voile de fibres, et respectivement en aval pour diffuser le voile vers le tapis de réception. Aussi, la paroi 69b en amont est évasée vers le haut de l'installation, tandis que la paroi en aval 69a est évasée vers le bas.

Dans les modes de réalisation des figures 1 et 2, l'orientation des ailettes est réglée en fonction de la vitesse et de la direction à donner à l'air arrivant autour du voile de verre pour son expansion, la vitesse étant différente selon la position en hauteur du dispositif d'amélioration 6, proche ou plus éloigné du dispositif d'étirage.

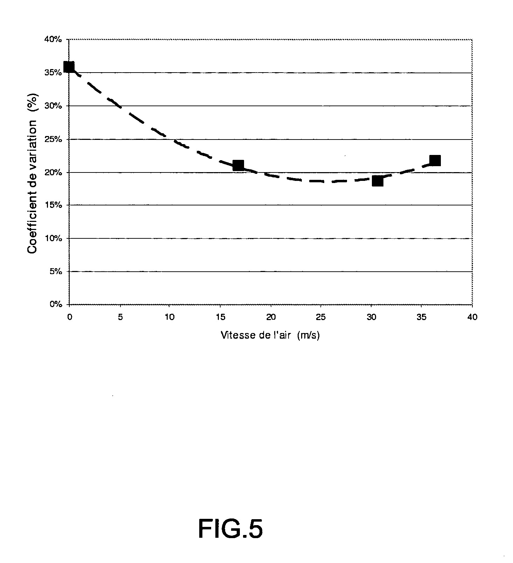

La figure 5 illustre une courbe sur le coefficient de variation de la masse surfacique d'un feutre en fonction de la vitesse de l'air projeté par les moyens 6. Cette courbe est obtenue dans une installation pilote en regard du mode de réalisation de la figure 2. On fait varier ici la vitesse de l'air en réglant la pression d'alimentation en air.

L'installation de formation délivre une nappe de 1400 mm de large. Sept bandes de largeur de 200 mm et de longueur de 300 mm sont découpées et leur poids est mesuré.

On calcule également la moyenne des sept poids mesurés et l'écart type de ces mesures.

Le coefficient de variation pour la largeur de la nappe découpée est ensuite calculé par le rapport entre l'écart type et la moyenne des poids.

Des prélèvements de la nappe ont été effectués selon quatre mesures de vitesse de l'air projeté entre 0 et 37 m/s.

Lorsque le dispositif de l'invention ne fonctionne pas (vitesse à 0 m/s), le coefficient de variation est de l'ordre de 35%. En effet, sans soufflage d'air, les parois de prolongement 69a et 69b concentrent les fibres au centre du feutre ce qui donne un coefficient de variation plus élevé.

Lorsque le dispositif de l'invention est mis en fonctionnement, en réglant la vitesse de l'air entre 20 et 30 m/s, on constate que le coefficient de variation n'est plus que de l'ordre de 17%.

Cette diminution du coefficient de variation à l'aide du dispositif rend compte d'une meilleure répartition des fibres et donc d'une diminution de la densité des feutres produits à l'aide du dispositif de l'invention.

## Revendications

1. Dispositif (6) d'aide à la formation de feutres de fibres, les fibres étant formées à partir d'une matière étirable par centrifugation interne et par étirage au moyen d'un courant gazeux, le flux de fibres se présentant sous forme d'un voile tubulaire (2), le dispositif comprenant des moyens de soufflage d'air (6) projetant de l'air tangentiellement au voile tubulaire (2) de manière à imprimer au voile un mouvement de rotation, **caractérisé en ce que** les moyens de soufflage (6) amènent de l'air selon une direction perpendiculaire à la direction principale du flux du voile tubulaire.

2. Dispositif selon la revendication 1, **caractérisé en ce que** les moyens de soufflage (6) délivrent de l'air sous une vitesse de 1 à 45 m/s.

3. Dispositif selon la revendication 1 ou 2, **caractérisé en ce que** les moyens de soufflage (6) consistent en une chambre annulaire (60) qui comporte une paroi externe pleine (61) et une paroi interne (62) partiellement ouverte et destinée à entourer le voile tubulaire (2), la paroi externe présentant au moins une arrivée d'air (63) et la paroi interne (62) comprenant des ailettes d'obturation partielle (64).

4. Dispositif selon la revendication 3, **caractérisé en ce que** la chambre annulaire (60) est alimentée par une pluralité d'arrivées d'air (63), la pression de l'air sortant de chaque arrivée pouvant être réglable pour assurer si besoin des écarts de pression sur la périphérie de la chambre.

5. Dispositif selon la revendication 3 ou 4, **caractérisé en ce que** les ailettes (64), notamment pivotables, sont orientées selon un angle d'ouverture, de préférence compris entre 15 et 40°.

6. Dispositif selon l'une quelconque des revendications 3 à 5, **caractérisé en ce que** la paroi interne (62) est doublée d'un bandeau annulaire (68) en regard du voile et s'étendant sur au moins une partie de la hauteur des ailettes.

7. Dispositif selon l'une des revendications 3 à 6, **caractérisé en ce que** la chambre annulaire (60) comporte une grille annulaire (67) de répartition de l'air au travers de la paroi interne (62) en regard des ailettes (64).

8. Dispositif selon l'une des revendications 3 à 7, **caractérisé en ce qu'**il comporte au moins une paroi tubulaire et évasée de prolongement (69a) qui s'étend d'un côté de la chambre annulaire, la paroi étant destinée à diffuser le voile tubulaire (2) en sortie des moyens (6).

9. Dispositif selon la revendication 8, **caractérisé en ce qu'**il comporte une autre paroi tubulaire et évasée de prolongement (69b) qui s'étend à l'opposé, de l'autre côté de la chambre annulaire et qui est destinée à guider le voile tubulaire (2) à l'entrée des moyens (6).

10. Installation de formation de feutres de fibres comportant un dispositif de centrifugation (10) d'une matière étirable qui est pourvu d'une assiette de fibrage (11) délivrant des filaments de ladite matière, un inducteur (30) qui est agencé sous le dispositif de centrifugation (10), et un dispositif d'étirage gazeux (20) qui fournit un courant gazeux à haute température et qui assure la transformation des filaments en fibres sous la forme d'un voile tubulaire (2), **caractérisée en ce qu'**elle comporte un dispositif d'amélioration de la répartition des fibres (6) selon l'une quelconque des revendications 1 à 9 qui est placé immédiatement sous l'inducteur (30) ou bien à distance de l'inducteur (30).

11. Installation selon la revendication 10, **caractérisée en ce que** le dispositif (6) est constitué d'un matériau résistant à la chaleur et ne captant pas le champ magnétique générés par l'inducteur.

12. Installation selon la revendication 11, **caractérisée en ce que** la distance de séparation du dispositif (6) à l'inducteur (30) va jusqu'à 1,5 fois le diamètre de l'assiette de fibrage (11).

13. Installation selon l'une des revendications 10 à 12, **caractérisée en ce qu'**elle comporte un dispositif d'amenée de liant (40) qui est disposé en aval du dispositif d'amélioration de la répartition des fibres (6).

14. Procédé de fabrication d'un feutre de fibres utilisant le dispositif selon l'une quelconques des revendications 1 à 9 pour améliorer la répartition des fibres dans le feutre.

## Patentansprüche

1. Vorrichtung (6) zum Unterstützen der Bildung von Faserfilzen, wobei die Fasern durch Innenschleudern und durch Ausziehen mittels eines Gasstromes aus einem ausziehfähigen Material gebildet werden, der Faserstrom in Form eines röhrenförmigen Schleiers (2) vorliegt und die Vorrichtung Einrichtungen (6) zum Ausblasen von Luft aufweist, die Luft tangential zu dem röhrenförmigen Schleier (2) ausstoßen, derart dass sie den Schleier in eine Drehbewegung versetzen, **dadurch gekennzeichnet, dass** die Einrichtungen (6) zum Ausblasen von Luft in einer zu der Hauptflussrichtung des röhrenförmigen Schleiers senkrechten Richtung Luft zuführen.

2. Vorrichtung nach Anspruch 1, **dadurch gekennzeichnet, dass** die Gebläseeinrichtungen (6) Luft mit einer Geschwindigkeit von 1 bis 45 m/s abgeben.

3. Vorrichtung nach Anspruch 1 oder 2, **dadurch gekennzeichnet, dass** die Gebläseeinrichtungen (6) aus einer ringförmigen Kammer (60) bestehen, die eine geschlossene Außenwand (61) und eine teilweise offene Innenwand (62) umfasst, welche dazu vorgesehen ist, den röhrenförmigen Schleier (2) zu umgeben, wobei die Außenwand mindestens einen Lufteinlass (63) aufweist und die Innenwand (62) Klappen (64) zum teilweisen Verschließen umfasst.

4. Vorrichtung nach Anspruch 3, **dadurch gekennzeichnet, dass** die ringförmige Kammer (60) von einer Mehrzahl von Lufteinlässen (63) gespeist wird, wobei der Druck der aus jedem Einlass austretenden Luft regelbar sein kann, um bei Bedarf Druckunterschiede am Kammerumfang zu gewährleisten.

5. Vorrichtung nach Anspruch 3 oder 4, **dadurch gekennzeichnet, dass** die, insbesondere schwenkbaren, Klappen (64) in einem Öffnungswinkel von vorzugsweise zwischen 15 und 40° ausgerichtet sind.

6. Vorrichtung nach einem der Ansprüche 3 bis 5, **dadurch gekennzeichnet, dass** die Innenwand (62) mit einem ringförmigen Band (68) ausgekleidet ist, das dem Schleier gegenüberliegt und sich über mindestens einen Teil der Höhe der Klappen erstreckt.

7. Vorrichtung nach einem der Ansprüche 3 bis 6, **dadurch gekennzeichnet, dass** die ringförmige Kammer (60) ein ringförmiges Gitter (67) zum Verteilen der Luft durch die den Klappen (64) gegenüberliegende Innenwand (62) umfasst.

8. Vorrichtung nach einem der Ansprüche 3 bis 7, **dadurch gekennzeichnet, dass** sie mindestens eine röhrenförmige, sich weitende Verlängerungswand (69a) umfasst, die sich von einer Seite der ringförmigen Kammer erstreckt, wobei die Wand dazu vorgesehen ist, den röhrenförmigen Schleier (2) am Auslass der Einrichtungen (6) zu zerstreuen.

9. Vorrichtung nach Anspruch 8, **dadurch gekennzeichnet, dass** sie eine weitere röhrenförmige, sich weitende Verlängerungswand (69b) umfasst, die sich gegenüberliegend, von der anderen Seite der ringförmigen Kammer erstreckt und dazu vorgesehen ist, den röhrenförmigen Schleier (2) am Einlass der Einrichtungen (6) zu führen.

10. Anordnung zur Bildung von Faserfilzen, welche umfasst: eine Vorrichtung (10) zum Schleudern eines ausziehfähigen Materials, die mit einer Zerfaserungsscheibe (11) versehen ist, welche Filamente des Materials ausgibt, eine unter der Schleudervorrichtung (10) angeordnete Induktionsspule (30) und eine Gasausziehvorrichtung (20), die einen Hochtemperaturgasstrom bereitstellt und die Umformung der Filamente zu Fasern in Form eines rohrförmigen Schleiers (2) gewährleistet, **dadurch gekennzeichnet, dass** sie eine Vorrichtung (6) zum Verbessern der Verteilung der Fasern nach einem der Ansprüche 1 bis 9 umfasst, die unmittelbar unter der Induktionsspule (30) oder auch in einem Abstand von der Induktionsspule (30) platziert ist.

11. Anordnung nach Anspruch 10, **dadurch gekennzeichnet, dass** die Vorrichtung (6) aus einem hitzebeständigen Material gebildet ist, das nicht empfänglich ist für das von der Induktionsspule erzeugte Magnetfeld.

12. Anordnung nach Anspruch 11, **dadurch gekennzeichnet, dass** der Abstand, der die Vorrichtung (6) von der Induktionsspule (30) trennt, das bis zu 1,5-fache des Durchmessers der Zerfaserungsscheibe (11) beträgt.

13. Anordnung nach einem der Ansprüche 10 bis 12, **dadurch gekennzeichnet, dass** sie eine Vorrichtung (40) zum Zuführen von Bindemittel umfasst, die der Vorrichtung (6) zum Verbessern der Verteilung der Fasern nachgelagert angeordnet ist.

14. Verfahren zur Herstellung eines Faserfilzes unter Verwendung der Vorrichtung nach einem der Ansprüche 1 bis 9 zum Verbessern der Verteilung der Fasern in dem Filz.

## Claims

1. A device (6) for helping in the formation of fibrous felts, the fibers being formed from a material that can be attenuated by internal centrifugation and by attenuation by means of a gas stream, the flow of fibers being in the form of a tubular veil (2), the device including air blowing means (6) that expel air tangentially to the tubular veil (2) so as to impress a rotational movement on the veil, **characterized in that** the blowing means (6) supply air in a direction perpendicular to the main direction of the flow of the tubular veil.

2. The device as claimed in claim 1, **characterized in that** the blowing means (6) deliver air at approximately 1 to 45 m/s.

3. The device as claimed in claim 1 or 2, **characterized in that** the blowing means (6) consist of an annular chamber (60) that has a solid external wall (61) and a partially open internal wall (62) intended to surround the tubular veil (2), the external wall having at least one air intake (63) and the internal wall (62) having partial blocking fins (64).

4. The device as claimed in claim 3, **characterized in that** the annular chamber (60) is supplied via a plurality of air intakes (63), it being possible for the pressure of the air emanating from each intake to be adjusted in order to provide, if required, pressure differences around the periphery of the chamber.

5. The device as claimed in claim 3 or 4, **characterized in that** the fins (64), which in particular can be pivoted, are oriented at an opening angle of preferably between 15 and 40°.

6. The device as claimed in any one of claims 3 to 5, **characterized in that** the internal wall (62) is lined with an annular liner (68) facing the veil and extending over at least part of the height of the fins.

7. The device as claimed in one of claims 3 to 6, **characterized in that** the annular chamber (60) includes an annular grid (67) for distributing the air through the internal wall (62) facing the fins (64).

8. The device as claimed in one of claims 3 to 7, **characterized in that** it includes at least one tubular flared extension wall (69a) that extends from one side of the annular chamber, the wall being intended to diffuse the tubular veil (2) leaving the means (6).

9. The device as claimed in claim 8, **characterized in that** it includes another flared tubular extension wall (69b) that extends on the opposite side, on the other side from the annular chamber and is intended to guide the tubular veil (2) on entering the means (6).

10. An installation for forming fibrous felts that includes a device (10) for centrifuging an attenuable material that is provided with a fiberizing dish (11) delivering filaments of said material, an inductor (30) which is placed beneath the centrifugation device (10), and a gas attenuation device (20) that delivers a high-temperature gas stream that converts the filaments into fibers in the form of a tubular veil (2), **characterized in that** it includes a device (6) for improving the distribution of the fibers according to any one of claims 1 to 9, which is placed immediately beneath the inductor (30) or else at some distance from the inductor (30).

11. The installation as claimed in claim 10, **characterized in that** the device (6) is made of a heat-resistant material that does not pick up the magnetic field generated by the inductor.

12. The installation as claimed in claim 11, **characterized in that** the distance separating the device (6) from the inductor (30) ranges up to 1.5 times the diameter of the fiberizing dish (11).

13. The installation as claimed in one of claims 10 to 12, **characterized in that** it includes a binder supply device (40) that is placed downstream of the device (6) for improving the distribution of the fibers.

14. A process for manufacturing a fibrous felt using the device as claimed in any one of claims 1 to 9 for improving the distribution of the fibers in the felt.
